# EUROPEAN PATENT APPLICATION

(11) **EP 2 168 460 A1**
(43) Date of publication of application: **31.03.2010**
(21) Application number: 08165241.4
(22) Date of filing: 26.09.2008
(51) Int. Cl.: A47C 31/10

(54) **A detachable cover for the back rest of a seat**

(71) Applicant: ThoMak I/S v/Mark Christiansen og Thomas Theilgaard Iversen, 2450 København SV (DK)
(72) Inventor: Christiansen, Mark, 2970 Hørsholm (DK); Iversen, Thomas Theilgaard, 2450 København SV (DK)
(74) Representative: Plougmann & Vingtoft A/S

(57) **Abstract**

The invention relates to a detachable cover (5) for attachment to a back rest of seat in a row of seats. The cover comprises a rear section (6) intended for constituting the outer appearance of the back rest, said rear section having a lower storage section (14). The cover also comprises an upper display section (15), and said cover also comprising a front section (7) intended for constituting the front of the back rest. The probability of the person using the storage section seeing the information of the display section is very high, because the person, when putting items into the storage section, cannot avoid seeing the information of the display section.

## Description

### FIELD OF THE INVENTION

The invention relates to a cover comprising a rear section having a lower storage section for storing personal items of a person seated behind the back rest.

### BACKGROUND OF THE INVENTION

GB 103,935 discloses a holder for coats, hast, umbrellas and the like for use in connection with theatre and other seats, which can be opened out to a holding position, and which can be closed or folded back in such a manner that the passageway between seats is not obstructed to any extent. When the holder is in a holding position, personal items in the cover may fall out of the cover and onto the floor, possibly in under the seat, without the person noticing it. Furthermore, the holder is not detachable from, but is fixed to, the seat.

GB 6406 discloses a swinging desk-like attachment for a chair back. The attachment is adapted, when not in use, to be swung and retained against the back so as to be out of the way of persons passing between rows of chairs. The attachment is equipped with divisions for the reception and display of advertisements, announcements and the like. When the attachments is raised and swung upwards, the advertisement may be covered by a theatre programme or personal items such as a hat, gloves and the like items placed on the attachment. Furthermore, the holder is not detachable from, but is fixed to, the seat.

US 6,053,570 discloses a flexible cover attachable to the underside of theatre seats, allowing for the storage of personal items. The cover comprises an expandable storage structure, having a bottom section, a top section, a front section, a back section, and side sections, the side sections positioned between the top section and the bottom section and the front section and the back section. The expandable structure have an elasticized opening at the top section, and at least one strap attached to each of the two sides of the expandable structure with each distal end of said at least one strap having a closure mechanism, which is complementary with the other said closure mechanism, thereby allowing the distal ends of said straps to be removably connected. When the seat is in a seating position the opening of the cover faces outwardly. Personal items in the cover may fall out of the cover and onto the floor under the seat without the person noticing it. Furthermore, the person will be sitting on buckles of the cover.

US 5,820,210 discloses a cover for attachment to chairs comprises a frame and a receptacle. The frame has a first part that is proximal to the chair when attached and a second part that is similar in shape to the first part and distal to the chair when attached. In a first embodiment, pegs extend from the inner face of the first part through the side edges of the receptacle and into sockets in the second part of the frame. The two parts of the frame are reversibly connected by conventional fasteners such as screws or bolts. In a second embodiment, detents extend from the inner face of the first part of the frame through the side edges of the receptacle. The detents are snapped into sockets placed in the second part of the frame, securely holding the two parts together. The detents allow the two parts of the frame to be pulled apart when desired, for example, to replace the receptacle. In both embodiments, a pocket is attached to the bottom of the receptacle and filled with advertising or marketing materials. The cover is not detachable. When the seat is in a seating position the opening of the cover faces outwardly. Personal items in the cover may fall out of the cover and onto the floor under the seat without the person noticing it.

### SUMMARY OF THE INVENTION

It may be an object of the invention to provide a cover for a seat, said cover both being capable of accommodating personal items and the cover being capable of displaying advertisements, however without any of the disadvantages such as loosing items or having fixed covers according to the prior art cited.

This object may be obtained by a detachable cover for attachment to a back rest of seat in a row of seats, said cover comprising: a rear section intended for constituting the outer appearance of the back rest, said rear section having a lower storage section and an upper display section, and said cover also comprising a front section intended for constituting the front of the back rest, and said cover furthermore preferably having elements such as straps or a Velcro®-closure for securing the cover to the back rest of the seat when the cover is attached to the back rest of the seat.

Providing the cover at the back rest of a seat increases the practicability of the storage section. The storage section is readily visible for the person using the storage section, i.e. the person situated behind the seat onto which the cover is attached, and the person using the storage section will readily discover if any items fall out of the storage section. At the same time, providing a display section, the person using the storage section may also be exposed to any information desired or needed. The probability of the person using the storage section seeing the information is very high, because the person, when putting items into the storage section, cannot avoid seeing the information of the display section.

### BRIEF DESCRIPTION OF THE DRAWINGS

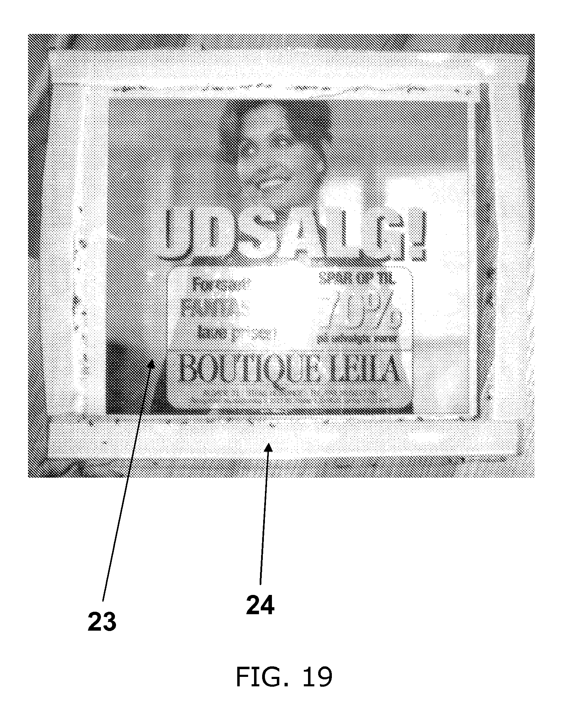

The invention will hereafter be described with reference to the drawings, where
Fig. 1-19 show different photos of an embodiment according to the invention.

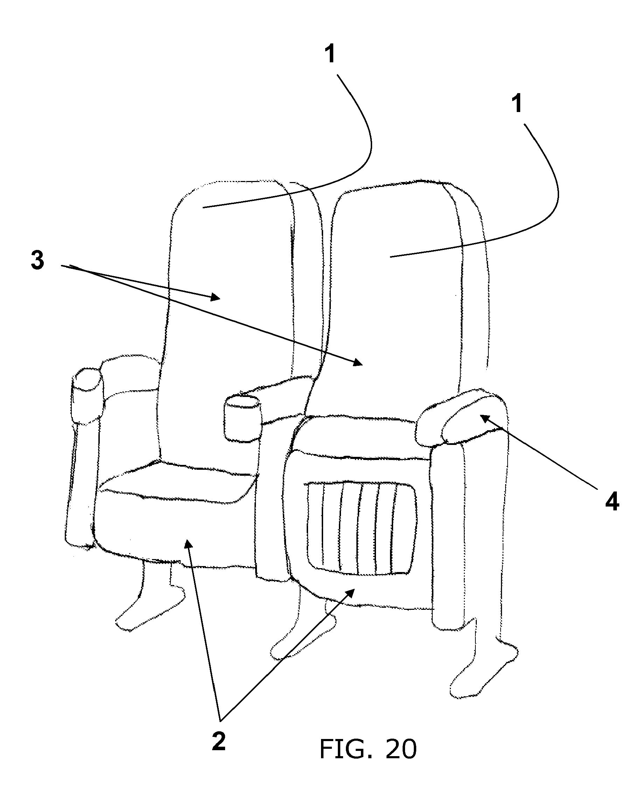

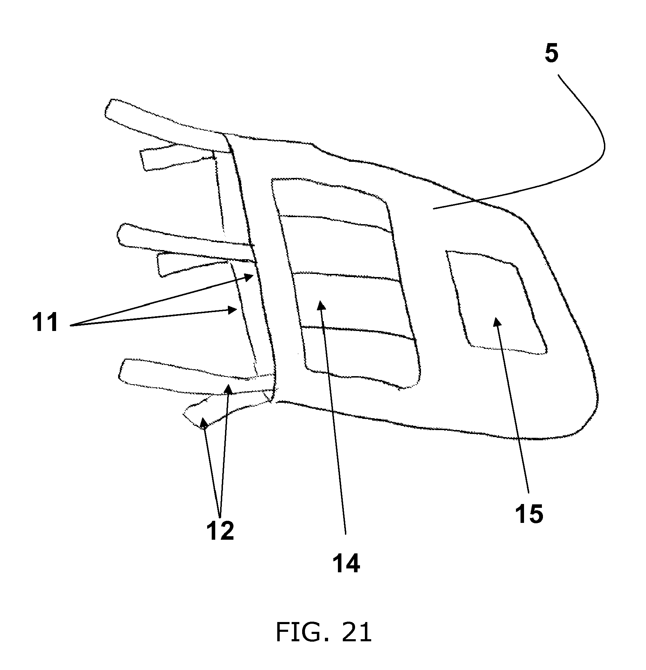

Fig. 20-21 show different sketches of an embodiment according to the invention.

### DETAILED DESCRIPTION OF AN EMBODIMENT OF THE INVENTION

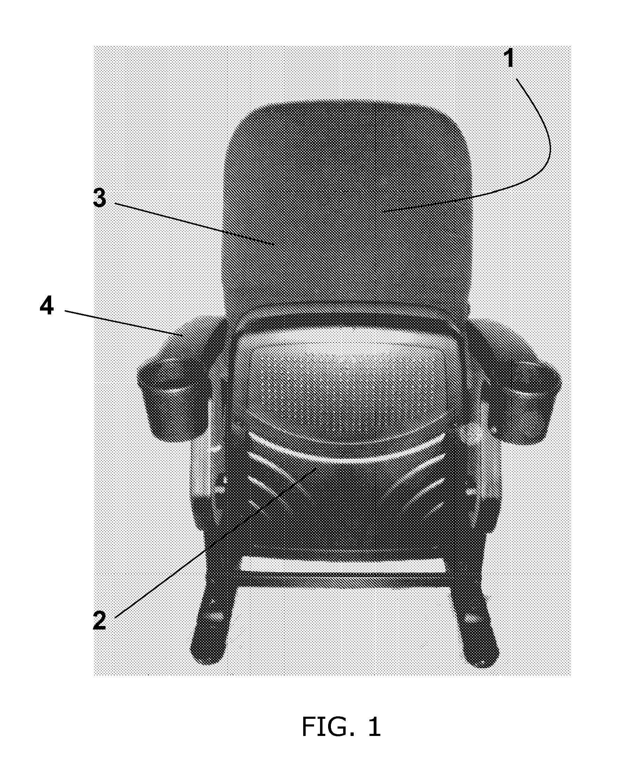

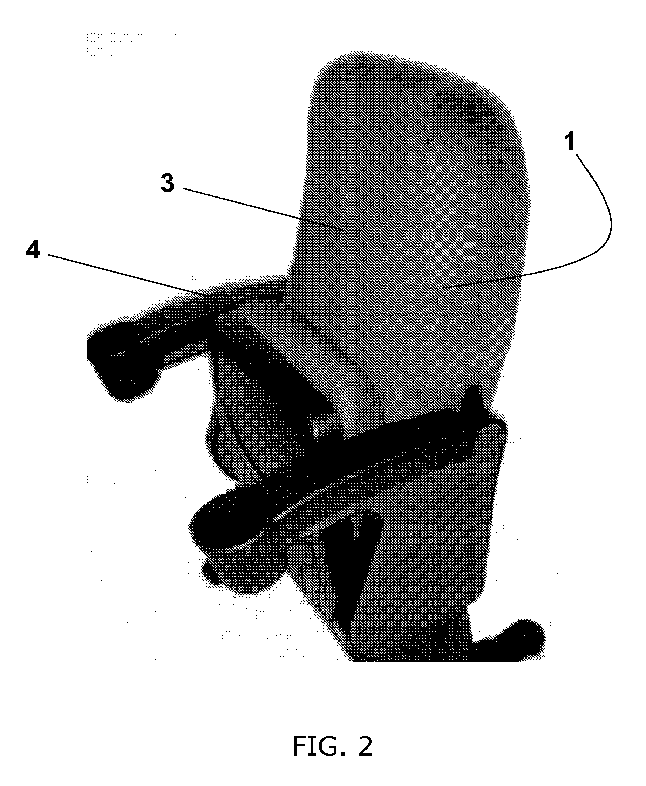

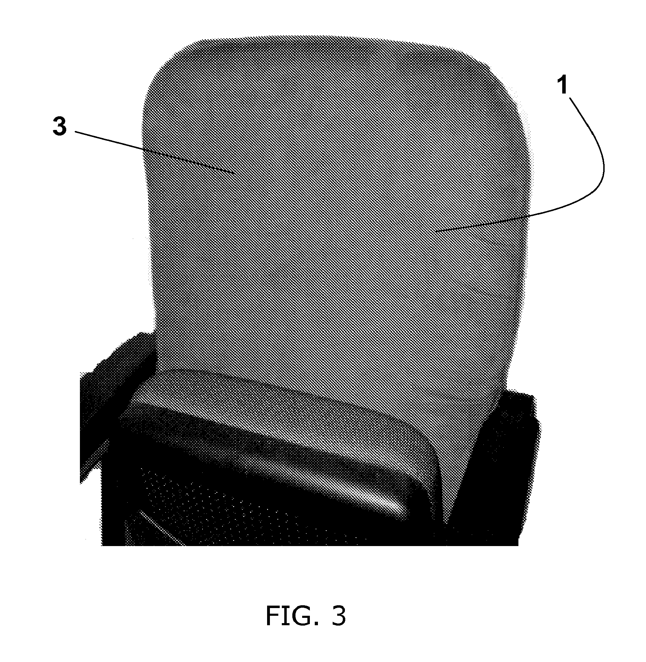

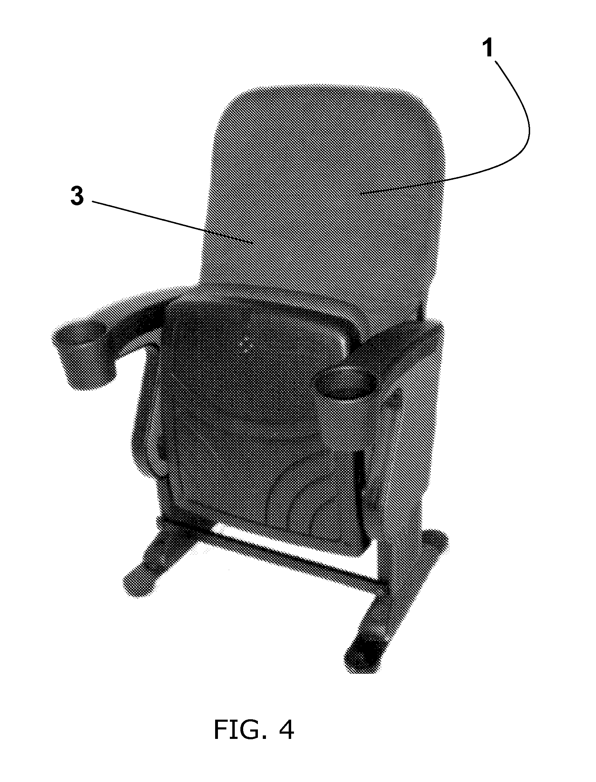

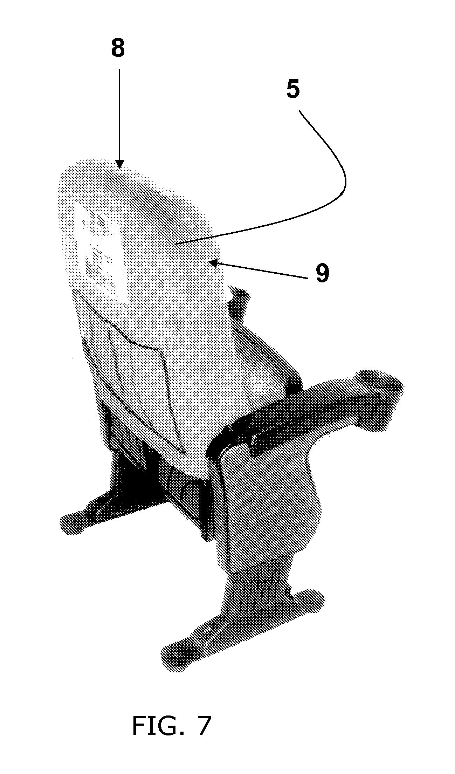

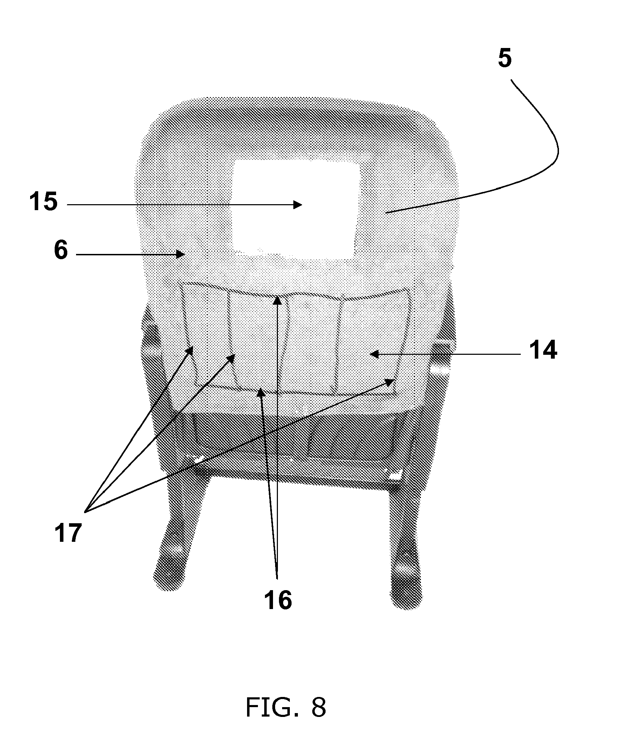

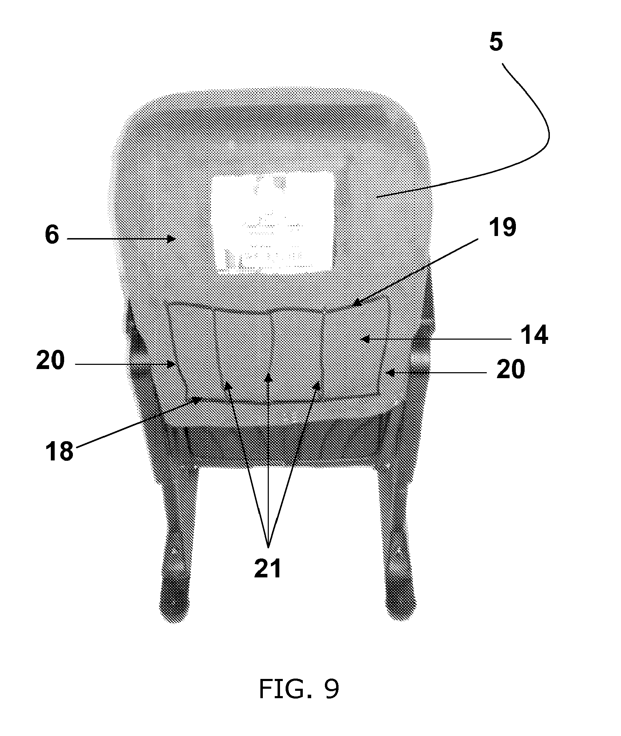

Fig. 1-5 and Fig. 7-9 show different photos of a cinema chair (1) having a seat (2), a back rest (3) and arm rests (4), and where a cover (5) according to the invention is attached to the back rest. The cover (5) has a rear side (6) and a front side (7), both of which are made of fabric, and the cover completely covers the outer fabric of the back rest itself.

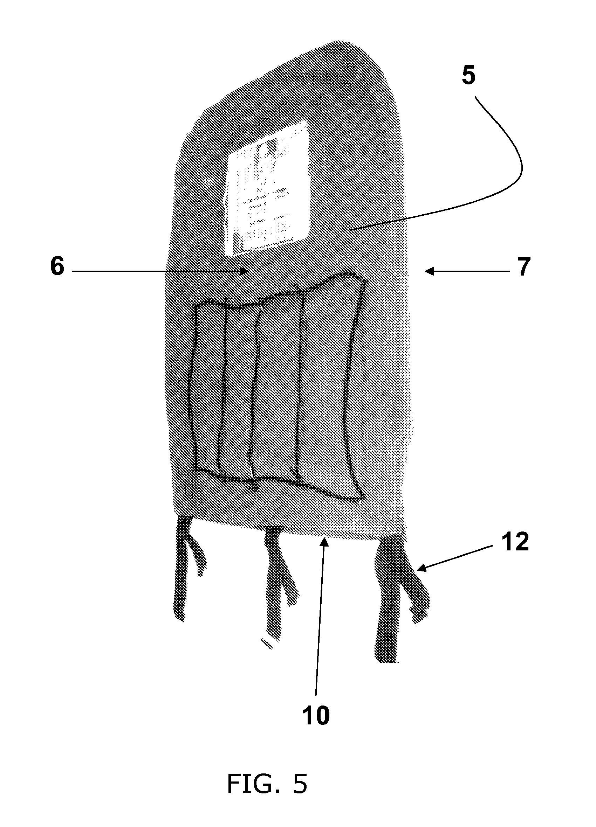

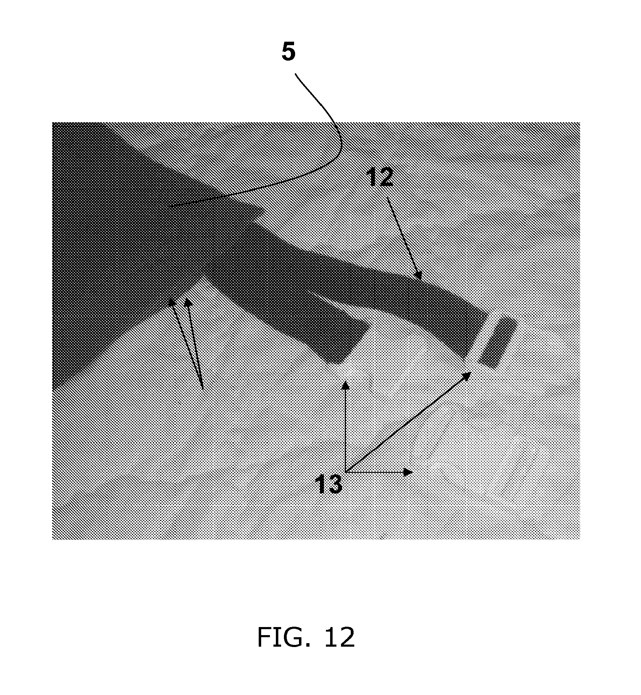

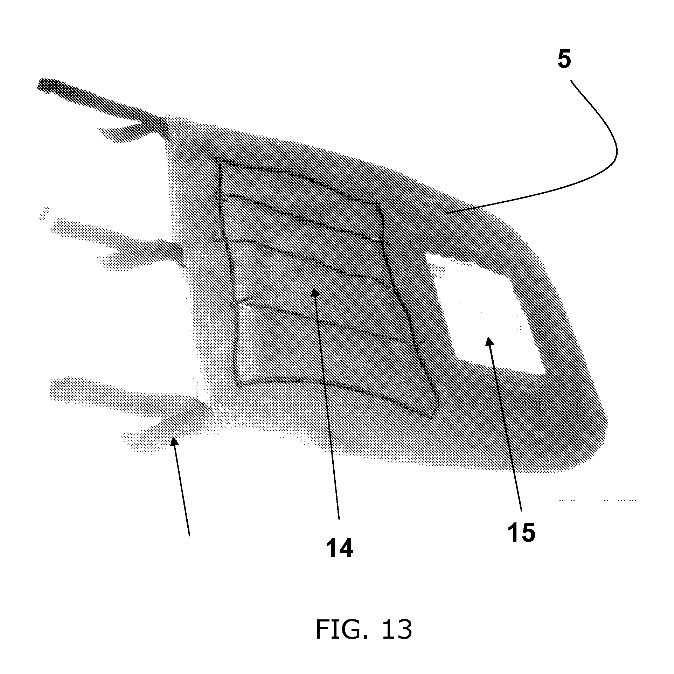

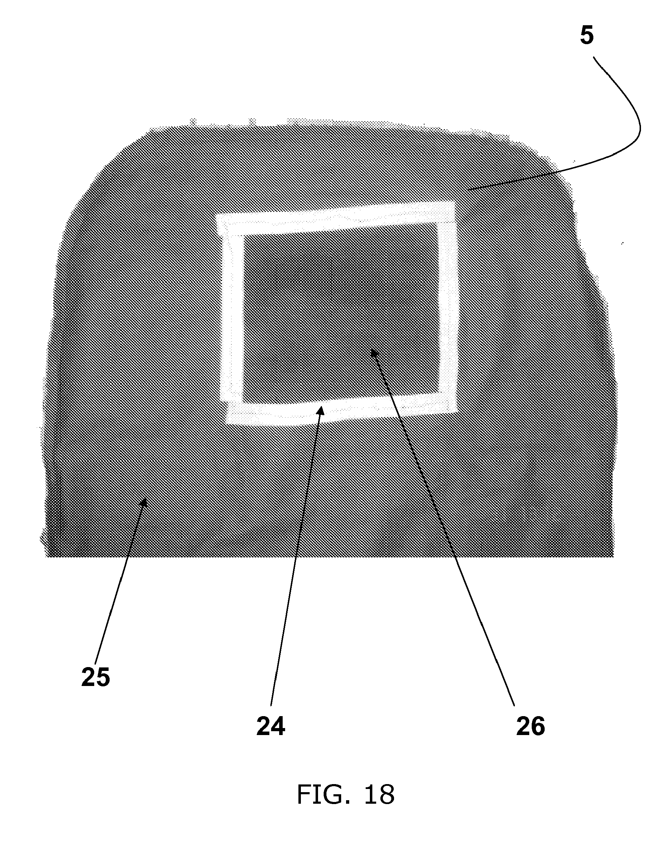

Fig. 5, fig. 12, fig. 13 and fig. 18 are photographs showing the cover (5) when not attached to the beck rest (3) of the seat. The cover is made of fabric having a front side (7) and a rear side (6). The front side and the rear side are mutually joined at a top edge (8) and along at least part of the side edges (9) of the cover, either by being made from a fabric having a inverted bag-like configuration or by being mutually joined such as by sewing. Preferably, only the upper part of the side edges, extending form the top of the cover, are joined. Thereby, any arm rests which may be part of the seat may be accommodated when the cover is attached to the back rest of the seat.

An opening (10) is established at a bottom of the cover (5). The opening enables the cover to be attached to the back rest (3) of the seat (1). Along bottom edges (11) of the cover (5), the cover is provided with straps (12) to be mutually attached to each other once the cover has been attached to the back rest (3). The straps ensure that the cover will not slide off the back rest, when persons are sitting in the seat. The straps (12) are mutually joined by means of buckles (13) to be closed and to be opened when the cover is to be removed from the back rest, e.g. if the cover is to be washed.

In an alternative embodiment, ensuring that the cover will not slide off the back rest, when persons are sitting in the seat may be established by other means than by straps (12) and buckles (13). The bottom edges of the front side and the rear side may be attached underneath the bottom of the back rest, and a Velcro®-closure at the bottom edge of the front side and rear side, respectively, is closed at the bottom of the back rest, out of sight for persons seating in the seat end behind the seat.

In even an alternative embodiment, no means for ensuring that the cover (5) will not slide off the back rest (3), when persons are sitting in the seat (2) is established. The cover will stay in place once attached to the back rest merely by the individual friction between the front side of the cover and the front side of the back rest, and the rear side of the cover and the back side of the back rest, respectively.

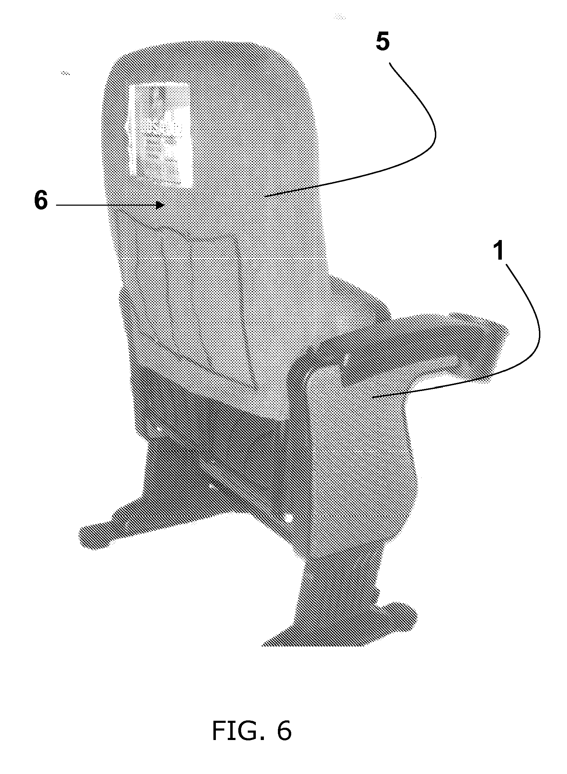

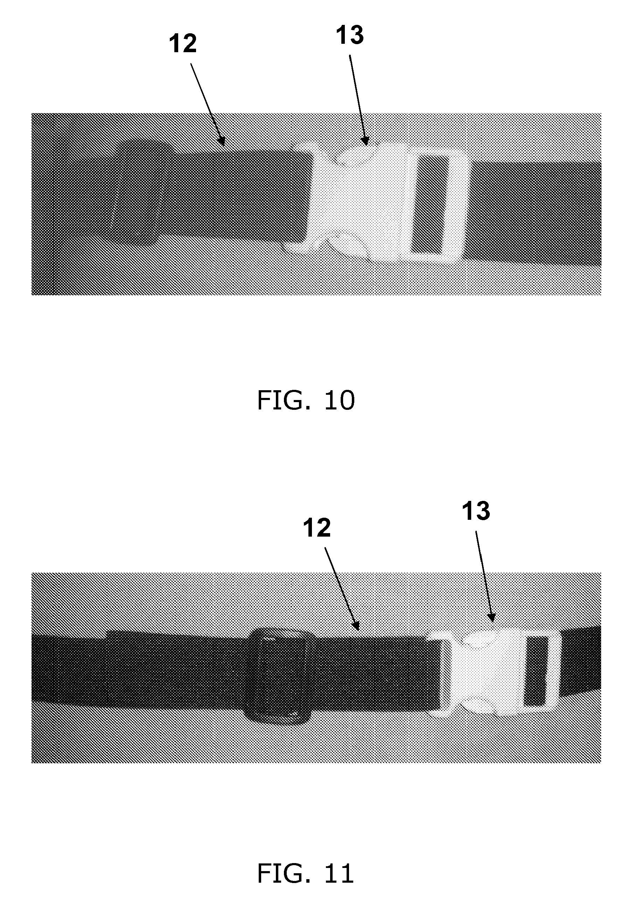

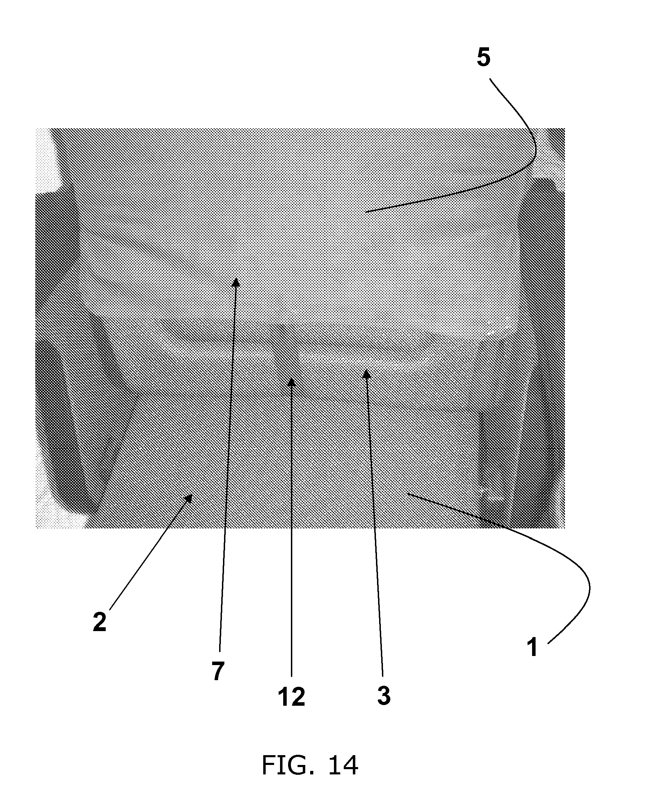

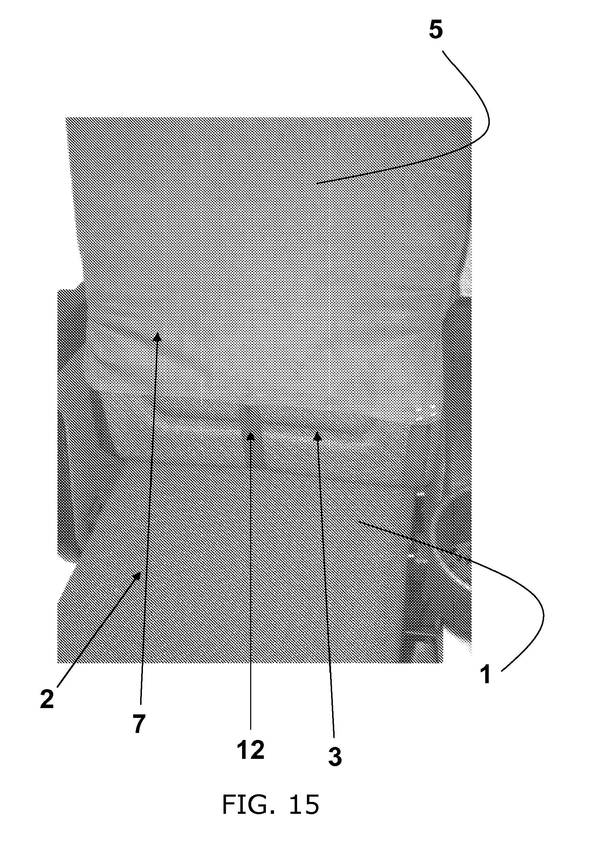

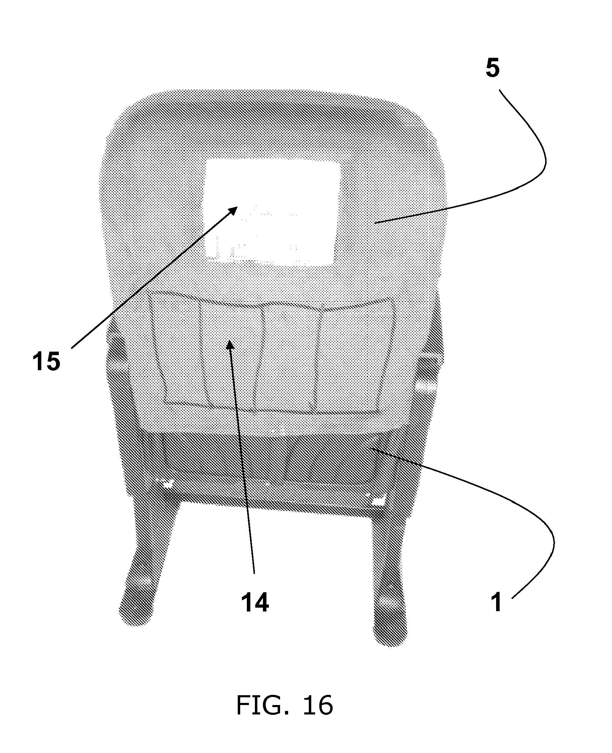

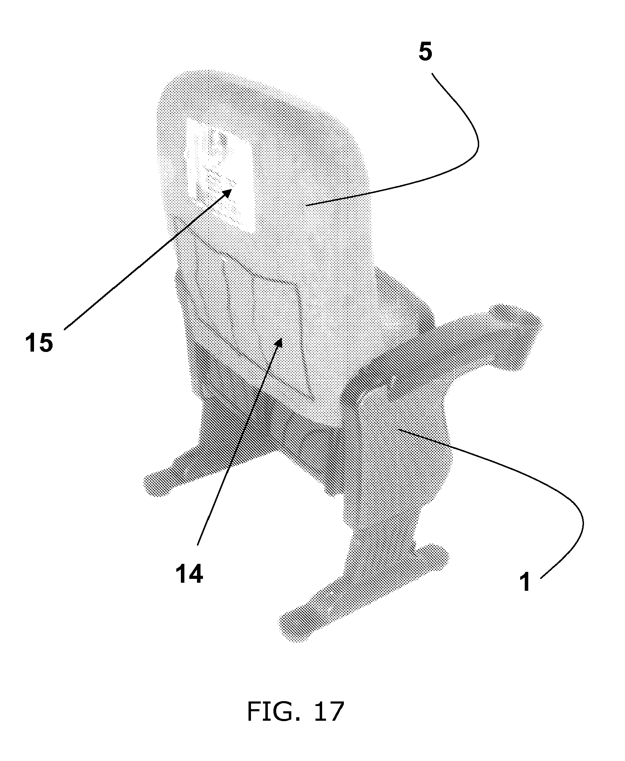

Fig. 1-4, fig. 6-11, and fig. 14-17 are photographs showing an embodiment of the cover, when attached to a beck rest of a seat, e.g. from a cinema. The seat may also be a seat from a theatre, a concert hall or other room where people are sitting in rows. Thus, the seat may also be a seat in a bus, in a train in an aeroplane or other vessel where people are sitting in rows when being transported by the vessel.

The front side (7) of the cover (5), once attached to the back rest, will leave no in-comfortable means such as straps, buckles and the like to the person sitting in the seat. Also, any means such as padding, specially shaped appearance of the back rest and any other means of the back rest for ensuring a comfortable seating of the person sitting in the seat, will be effective, even when the cover is attached to the back rest. The cover will be completely flush with the shape of the front side of the back rest once a person is sitting in the seat.

The rear side (6) of the cover (5) is provided with a storage section (14) and a display section (15). In the embodiment shown, the storage section is constituted by two elastic straps (16) extending sideways along a lower part of the rear side of the cover, and five elastic straps (17) extending upwards and downwards between the two straps, a lower strap and an upper strap, extending sideways.

The bottom one (18) of the two straps (16) extending sideways is fixed to the cover along all the sideways extension, thus being in flush abutment with cover along the entire extension. The upper one (19) of the two straps (16) extending sideways is only fixed to the cover at the sideways distal ends of the strap, thus enabling releasing the middle section of the upper strap from the flush abutment with the cover.

The distal two (20) of the five straps (17) extending upwards and downwards are preferably fixed to the cover (5) at the top and at the bottom, thus establishing a sideways opening of the storage section. The middle three (21) of the five straps (17) extending upwards and downwards are only fixed to the upper and lower straps extending sideways, thus enabling releasing the middle three of the five straps extending upwards and downwards from the flush abutment with the cover.

Thus, persons sitting in a row behind the row in which the seat with the back rest are provided, may use the storage section (14) for storing personal belongings such as coats , hats etc. when being seated in a seat of a row behind the row in which the seat with the back rest are provided. The storage section (14) preferably extends sideways along most of the width of the lower part of the cover, at least along half the widths, preferably along more than half the width, even preferred along more than 2/3 of the width, still even preferred along more than ¾ of the width of the lower part of the cover. Thereby, the size of the storage sections is maximised.

In alternative embodiments, the storage section (14) may be made of different materials and may be made in different configurations such as a net provided with meshes, a foil made from a transparent material, a sequence of straps extending in parallel sideways, a sequence of straps extending in parallel upwards and downwards, a sequence of straps extending crossing each other obliquely upwards and downwards, a sequence of straps extending crossing each other sideways and upwards and downwards, an expandable structure having an elasticized opening at the top, said storage section also having a rigid surface between the top and the bottom, said rigid surface being substantially flush with the back rest of the seat, when no items are accommodated in the storage section, a plate made from a transparent material, a plate provided with apertures, a plate made from a non-transparent material, a plate without apertures.

The different alternative embodiments may have different advantages related to manufacture, to use or to certainty of items in the storage section not accidently falling out of or deliberately being stolen from the storage section.

In the embodiment shown, the display section (15) is constituted by four side edges (22) enclosing e.g. an advertisement being attached within the four side edges. Preferably, the display section is provided with a transparent cover (23) for inhibiting e.g. the advertisement from being removed form the display section or for inhibiting e.g. the advertisement form falling out of the display section.

The display section is preferably made from two transparent plates being fixed to the cover by means of a Velcro®-closure (24). The advertisement or other display item is placed between the two transparent plates. Preferably, the Velcro®-closure is provided at the wrong side (25) of the rear side (6) of the cover (5), and the cover is provided with aperture (26) through which the display section is visible. Positioning the transparent plate on the wrong side of the cover ensures that the display section will not, either deliberately or by accident, be torn off the cover.

At least one of the four side edges (22) of the display section (15) are provided with an opening so that e.g. the advertisement may be placed in and subsequently removed form the display section. Preferably, at least one of the side edges, possibly both of the side edges are provided with openings for inserting sideways e.g. the advertisement. Alternatively, the top edge may be provided with an opening for inserting e.g. the advertisement in the display section.

In the embodiment of the cover shown, the display section (15) is provided with an advertisement. In alternative uses of the display section, the display section may be provided with a programme for a theatre show, with a travel schedule e.g. for a bus or a train, or with a safety instruction, e.g. in an aeroplane.

Thus, persons sitting in a row behind the row in which the seat with the back rest are provided, may be exposed to commercially related information, either of coming movies of a cinema or coming shows in a theatres, or of any goods or services. Alternatively, persons sitting in a row behind the row in which the seat with the back rest are provided, may be exposed to practically related information, e.g. different stops and time of stops for a bus or a train. Even in the alternatively, persons sitting in a row behind the row in which the seat with the back rest are provided, may be exposed to safety related information, e.g. how to exit an aeroplane, or how to put on a life vest in case of emergency of a ship.

In alternative embodiments, the display section (15) may be made of different materials and may be made in different configurations such as a foil made from a transparent material, a plate made from a transparent material, a plate provided with a central aperture for the plate to from a frame around at least part of the aperture, a surface provided with means for holding a rear side of an advertisement leaflet, a surface provided with means for holding side edges of an advertisement leaflet.

The different alternative embodiments may have different advantages related to manufacture, to use or to certainty of the information on the display device not being removed deliberately or by accident when persons pass the back rest.

The display section (15) preferably has a size for accommodating different standard size formats of paper in the country where the cover is being pout into use, Depending on the size of the cover, and depending on the size of the storage section, the side of display section may be larger or smaller, depending on the space left from the storage section on the rear side of the cover.

Thus, the formats used may be the ISO formats such as A5 format. Thus, formats in countries using the ISO format me be a width between and including 300 mm and 510 mm and a height between and including 210 mm and 510 mm, possible a width between and including 210 mm and 510 mm and a height between and including 300 mm and 510 mm, possibly a width between and including 150 mm and 300 mm and a height between and including 210 mm and 300 mm, possibly a width between and including 210 mm and 300 mm and a height between and including 150 mm and 300 mm, possibly a width between and including 75 mm and 150 mm and a height between and including 105 mm and 150 mm, possibly a width between and including 105 mm and 150 mm and a height between and including 75 mm and 150 mm.

However, the formats used may also be the US formats such as Letter format. Thus, formats in countries using the US format may be a width between and including 280 mm and 496 mm and a height between and including 216 mm and 496 mm, possible a width between and including 216 mm and 496 mm and a height between and including 280 mm and 496 mm, possibly a width between and including 140 mm and 280 mm and a height between and including 216 mm and 280 mm, possibly a width between and including 216 mm and 280 mm and a height between and including 140 mm and 280 mm, possibly a width between and including 70 mm and 140 mm and a height between and including 108 mm and 140 mm, possibly a width between and including 108 mm and 140 mm and a height between and including 70 mm and 140 mm.

## Claims

1. A detachable cover for attachment to a back rest of seat in a row of seats, said cover comprising: a rear section intended for constituting the outer appearance of the back rest, said rear section having a lower storage section and an upper display section, and said cover also comprising a front section intended for constituting the front of the back rest, and said cover furthermore preferably having elements such as straps or a Velcro®-closure for securing the cover to the back rest of the seat when the cover is attached to the back rest of the seat.

2. A detachable cover according to claim 1, said lower storage section having an top capable of being opened and having a bottom capable of being at least partly closed in order for the storage section to accommodate at least one of the following items: coat, hat, scarf, shoes, shirt, umbrella, bag, lab-top and mobile phone, said items belonging to a person being seated at a seat immediately behind the back rest of the seat which the cover is intended attached to.

3. A detachable cover according to claim 1 or claim2, where the storage section constitutes an expandable structure having an elasticized opening at the top, said storage section also having an elasticized surface between the top and the bottom, said elasticized surface being substantially flush with the back rest of the seat, when no items are accommodated in the storage section.

4. A detachable cover according to claim 3, where the storage section constitutes one of the following constructions: a net provided with meshes, a foil made from a transparent material, a sequence of straps extending in parallel sideways, a sequence of straps extending in parallel upwards and downwards, a sequence of straps extending crossing each other obliquely upwards and downwards, a sequence of straps extending crossing each other sideways and upwards and downwards.

5. A detachable cover according to claim 1 or claim2, where the storage section constitutes an expandable structure having an elasticized opening at the top, said storage section also having a rigid surface between the top and the bottom, said rigid surface being substantially flush with the back rest of the seat, when no items are accommodated in the storage section.

6. A detachable cover according to claim 5, where the storage section constitutes one of the following constructions: a plate made from a transparent material, a plate provided with apertures, a plate made from a non-transparent material, a plate without apertures.

7. A detachable cover according to any of the preceding claims where the upper display section constitutes one of the following constructions: a foil made from a transparent material, a plate made from a transparent material, a plate provided with a central aperture for the plate to from a frame around at least part of the aperture, a surface provided with means for holding a rear side of an advertisement leaflet, a surface provided with means for holding side edges of an advertisement leaflet.

8. A detachable cover according to claim 7, where the upper display section has the following dimensions of a width and a height: a width between and including 300 mm and 510 mm and a height between and including 210 mm and 510 mm, possible a width between and including 210 mm and 510 mm and a height between and including 300 mm and 510 mm, possibly a width between and including 150 mm and 300 mm and a height between and including 210 mm and 300 mm, possibly a width between and including 210 mm and 300 mm and a height between and including 150 mm and 300 mm, possibly a width between and including 75 mm and 150 mm and a height between and including 105 mm and 150 mm, possibly a width between and including 105 mm and 150 mm and a height between and including 75 mm and 150 mm.

9. A detachable cover according to claim 7, where the upper display section has the following dimensions of a width and a height: a width between and including 280 mm and 496 mm and a height between and including 216 mm and 496 mm, possible a width between and including 216 mm and 496 mm and a height between and including 280 mm and 496 mm, possibly a width between and including 140 mm and 280 mm and a height between and including 216 mm and 280 mm, possibly a width between and including 216 mm and 280 mm and a height between and including 140 mm and 280 mm, possibly a width between and including 70 mm and 140 mm and a height between and including 108 mm and 140 mm, possibly a width between and including 108 mm and 140 mm and a height between and including 70 mm and 140 mm.

10. A detachable cover according to any of claims 1-9, where the elements for securing the cover to the back rest of the seat when the cover is attached to the back rest of the seat constitutes a fabric extending continuously from one side edge of the detachable cover to an opposite side edge of the detachable cover and extending from a top of the cover, said fabric being removably attachable to a front side of the back rest of the seat, such that when said detachable cover is attached to said back rest, said opening of the storage section is facing upwards at the back of the back rest.

11. A detachable cover according to any of claims 1-9, where the elements for securing the cover to the back rest of the seat when the cover is attached to the back rest of the seat constitutes at least one strap extending continuously from one side edge of the detachable cover to an opposite side edge of the detachable cover, said at least one strap being removably attachable to a front side of the back rest of the seat, such that when said detachable cover is attached to said back rest, said opening of the storage section is facing upwards at the back of the back rest.

12. A detachable cover according to any of the claims 1-9, where the elements for securing the cover to the back rest of the seat when the cover is attached to the back rest of the seat constitutes at least two straps, one strap extending from one bottom edge of the detachable cover and another strap extending from an opposite bottom edge of the detachable cover, and distal ends of said at least two straps having complementary closure mechanisms, thereby allowing the distal ends of said straps to be removably connected, such that when said detachable cover is attached to said back rest, said opening of the storage section is facing upwards at the back of the back rest.

13. A detachable cover according to any of the claims 1-9, where the elements for securing the cover to the back rest of the seat when the cover is attached to the back rest of the seat constitutes two parts of a Velcro®-closure, one part extending from one bottom edge of the detachable cover and another strap extending from an opposite bottom edge of the detachable cover, and two parts of said Velcro®-closure having complementary closure mechanisms, thereby allowing the two parts of said Velcro®-closure to be removably connected, such that when said detachable cover is attached to said back rest, said opening of the storage section is facing upwards at the back of the back rest.
